# EUROPÄISCHE PATENTSCHRIFT

(11) **EP 4 263 267 B1**
(45) Veröffentlichungstag und Bekanntmachung des Hinweises auf die Patenterteilung: **09.09.2026**
(21) Anmeldenummer: 21835246.6
(22) Anmeldetag: 09.12.2021
(51) Int. Cl.: B60L 3/00, B60L 15/20

(54) **ELEKTRISCHE ANTRIEBSVORRICHTUNG FÜR EIN FAHRZEUG UND VERFAHREN ZUM BETREIBEN EINER ELEKTRISCHEN ANTRIEBSVORRICHTUNG FÜR EIN FAHRZEUG**
ELECTRIC DRIVE APPARATUS FOR A VEHICLE AND METHOD FOR OPERATING AN ELECTRIC DRIVE APPARATUS FOR A VEHICLE
APPAREIL D'ENTRAÎNEMENT ÉLECTRIQUE POUR VÉHICULE ET PROCÉDÉ D'ACTIONNEMENT D'UN APPAREIL D'ENTRAÎNEMENT ÉLECTRIQUE POUR VÉHICULE

(30) Priorität: 21.12.2020 DE 102020216373
(43) Veröffentlichungstag der Anmeldung: 25.10.2023
(73) Patentinhaber: Robert Bosch GmbH, 70442 Stuttgart (DE)
(72) Erfinder: OBOROWSKI, Paul, 71726 Benningen (DE)
(86) Internationale Anmeldenummer: PCT/EP2021/084940
(87) Internationale Veröffentlichungsnummer: WO 2022/135951

(56) Entgegenhaltungen:
- EP-A1- 3 708 407
- US-A1- 2016 185 247
- US-A1- 2019 263 413
- US-A1- 2021 016 659

## Beschreibung

Die vorliegende Erfindung betrifft eine elektrische Antriebsvorrichtung für ein Fahrzeug und ein Verfahren zum Betreiben einer elektrischen Antriebsvorrichtung für ein Fahrzeug.

### Stand der Technik

Herkömmliche Elektrofahrzeuge umfassen meist lediglich einen elektrischen Antrieb pro Achse und ein Differential zur Verteilung des Drehmoments, was auch zum Ausgleich von verschiedenen Raddrehzahlen bei einer Kurvenfahrt dienen kann.

Des Weiteren kann bei Elektrofahrzeugen mit zwei angetriebenen Achsen das Verhältnis des aufgebrachten Drehmoments zwischen Vorderachse und Hinterachse variiert werden.

Es ist dabei zu nennen, dass Strategien zur Drehmomentenverteilung üblicherweise auf einer Reaktion auf bereits limitierten Drehmomentgrenzwerten der Antriebe basieren können.

In der EP 2428704 A1 wird eine Ölversorgungsvorrichtung, die einen Regler aufweist, angegeben. Der Regler dient zum Einstellen eines Antriebsdrehmomentwerts und zum Regeln eines elektrischen Motors, sodass der elektrische Motor ein Antriebsmoment entsprechend der Öltemperatur abgibt.

Aus US 2019/0263413 A1 ist ein elektrisches Fahrzeug mit vorderem und hinterem elektrischen Antrieb bekannt, bei dem eine Drehmomentverteilung ("torque split") zwischen den Antriebseinheiten erfolgt. Wird die Temperatur eines Antriebs zu hoch, wird dessen Drehmoment reduziert und das andere erhöht, um Überhitzung zu vermeiden und die Leistungsfähigkeit zu optimieren.

US 2021/016659 A1 offenbart ebenfalls ein Fahrzeug mit Front- und Heckmotor, bei dem die Temperaturen beider Motoren überwacht werden. Überschreitet die Temperatur eines Motors einen Schwellenwert, wird dessen Drehmoment reduziert und das Drehmoment des anderen Motors erhöht.

EP 3 708 407 A1 beschreibt ein elektrisches Fahrzeugantriebssystem mit Vorder- und Hinterachsantrieb, bei dem eine Verlagerung von Drehmoment zwischen den Antrieben in Abhängigkeit fahrdynamischer Parameter erfolgt, und US 2016/0185247 A1 betrifft ein elektrisches Fahrzeug, bei dem eine Leistungsverteilung in Abhängigkeit von Temperaturgrößen angepasst wird.

### Offenbarung der Erfindung

Die vorliegende Erfindung schafft eine elektrische Antriebsvorrichtung für ein Fahrzeug nach Anspruch 1 und ein Verfahren zum Betreiben einer elektrischen Antriebsvorrichtung für ein Fahrzeug nach Anspruch 7.

Bevorzugte Weiterbildungen sind Gegenstand der Unteransprüche.

### Vorteile der Erfindung

Die der vorliegenden Erfindung zugrunde liegende Idee besteht darin, eine elektrische Antriebsvorrichtung für ein Fahrzeug und ein Verfahren zum Betreiben einer elektrischen Antriebsvorrichtung für ein Fahrzeug anzugeben, wobei eine Drehmomentverteilung zwischen einem ersten Antrieb und einem zweiten Antrieb erzeugt werden kann. Dabei kann eine übermäßige Erhitzung eines der Antriebe verringert oder sogar vermieden werden. Es kann dabei eine präventive Anpassung der Drehmomentverteilung umgesetzt werden, welche eine Reaktion auf ansteigende Temperaturen in einem der Antriebe oder in beiden Antrieben darstellen kann.

Die Variation des Drehmoments kann somit einen Freiheitsgrad darstellen, welcher typischerweise dazu verwendet werden kann, um das Fahrverhalten (Beschleunigen, Kurvenfahrt) zu verbessern, wobei die Drehmomentverteilung dynamisch an die Fahrsituation angepasst werden kann. Der minimale und maximale Wert der Drehmomentenverteilung oder eine Summe beider Drehmomente kann sich nach dem aktuellen Zustand der angetriebenen Achsen und der Batterie (Temperatur, Spannungslevel) orientieren.

Für den Fall, dass einer der beiden Antriebe eine kritische Temperatur erreicht, ist es möglich, dass der betroffene Antrieb das maximal abrufbare Drehmoment limitiert. Der nicht umsetzbare Anteil des Drehmoments kann dann von der anderen Achse aufgebracht werden. Falls eine derartige Limitierung an beiden Achsen durchgeführt wird, kann das Gesamtdrehmoment reduziert sein. Das Gesamtdrehmoment wird auch limitiert, wenn ein Umverteilen bei einer Grenztemperatur wegen einer aktuellen Fahrsituation nicht erfolgen kann.

Erfindungsgemäß umfasst die elektrische Antriebsvorrichtung für ein Fahrzeug einen ersten elektrischen Antrieb, welcher an einer Vorderachse des Fahrzeugs montierbar ist; einen zweiten elektrischen Antrieb, welcher an einer Hinterachse des Fahrzeugs montierbar ist; eine Steuereinrichtung, welche mit dem ersten elektrischen Antrieb und mit dem zweiten elektrischen Antrieb verbunden ist und dazu eingerichtet ist, eine erste Betriebstemperatur des ersten elektrischen Antriebs und eine zweite Betriebstemperatur des zweiten elektrischen Antriebs zu ermitteln und eine Erzeugung eines ersten Drehmoments an dem ersten elektrischen Antrieb und /oder eines zweiten Drehmoments an dem zweiten elektrischen Antrieb in Abhängigkeit von einer Fahrsituation des Fahrzeugs und/oder in Abhängigkeit von der ersten Betriebstemperatur und/oder von der zweiten Betriebstemperatur zu steuern, wobei jenes des ersten Drehmoments oder des zweiten Drehmoments verringerbar ist, dessen zugehörige Betriebstemperatur einen vorbestimmten Wert übersteigt und das entsprechend andere des ersten Drehmoments oder des zweiten Drehmoments vergrößerbar ist wenn dessen zugehörige Betriebstemperatur geringer als der vorbestimmte Wert ist.

Bei der Steuereinrichtung kann es sich um eine Steuereinrichtung handeln, mit der auch eine elektrische Maschine (am jeweiligen oder an beiden Antrieben) gesteuert werden kann, wobei diese an das Bordnetz des Fahrzeugs anschließbar sein kann.

Bei der Fahrsituation kann es sich um eine bestimmte Leistungsanforderung an einer der Achsen, etwa unterschiedlich oder gleich, oder um andere Vorgaben oder Anforderungen handeln, etwa eine Anfahrt an einer Steigung, in Kurvenfahrt, bei unterschiedlicher Beladung oder weiteres.

Der vorbestimmte Wert kann einem vorher bestimmten Grenzwert der Temperatur am jeweiligen Antrieb entsprechen, wobei davon ausgegangen werden kann, dass ein Betrieb des Antriebs unterhalb dieses Grenzwerts den Antrieb schonen kann und dann dieser auch eine maximale Leistung und Drehmoment erzeugen kann.

So kann die Drehmomentenverteilung bereits bei Annäherung an die Grenztemperatur des Betriebs des jeweiligen Antriebs angepasst werden. Durch die frühzeitige Reaktion wird der weitere Temperaturanstieg in dem heißen Antrieb reduziert.

Die Antriebsvorrichtung kann in Elektrofahrzeugen, (Plugin-) Hybridfahrzeugen, Brennstoffzellenfahrzeugen, Elektrorollern, Elektrofahrrädern mit zwei unabhängigen elektrischen Antrieben, oder weiteren Fahrzeugen genutzt werden und vorhanden sein. In dem Fahrzeug kann sich dann ein definiertes Temperaturverhältnis zwischen den Antrieben einstellen oder ein Ungleichgewicht in der Temperatur kann kompensiert werden, indem die Drehmomentenverteilung angepasst wird.

Durch die verbesserte Verteilung der Drehmomente kann eine größere Verfügbarkeit der Spitzenleistung beider Antriebe ermöglicht sein, es kann eine größere Verfügbarkeit des maximalen verstellbaren Bereichs der Drehmomentenverteilung erzielt werden, und es kann eine Unterstützung des Kühlsystems bei der Regulierung der Temperatur der Antriebe erzielt werden.

Nach der Erfindung ist es vorteilhaft möglich, den kühleren Antrieb zu erkennen und diesen stärker zu belasten als den wärmeren Antrieb, wobei der kühlere Antrieb dann das Drehmoment übernehmen kann, welches dann am wärmeren Antrieb reduziert werden kann. So kann ein thermisches Gleichgewicht zwischen den Antrieben erreicht werden oder zumindest kann eine Annäherung daran erfolgen, wodurch eine Reduktion der Drehmomentgrenzwerte hinausgezögert oder sogar vermieden werden kann. Diese Art von thermischer Umverteilung kann in unkritischen Fahrsituationen durchgeführt werden, etwa im Falle einer Geradeausfahrt. In Fahrsituationen die eine andere - nicht thermische orientierte - Verteilung erfordern, kann die Verteilung auf eine fahrdynamisch orientierte Verteilung verändert und so priorisiert werden, welcher dann ein größerer Verstellbereich für das Drehmoment und ein größeres Gesamtmoment zur Verfügung stehen kann, da die Temperatur der Antriebe vorab zumindest teilweise angeglichen werden kann.

Gemäß einer bevorzugten Ausführungsform der elektrischen Antriebsvorrichtung umfasst der vorbestimmte Wert einen ersten Grenzwert für die erste Betriebstemperatur und einen zweiten Grenzwert für eine zweite Betriebstemperatur.

Die Antriebe können unterschiedlich ausgelegt und aufgebaut sein und somit unterschiedliche Temperaturgrenzwerte aufweisen, ab welchen deren Leistung und/oder das aufbringbare Drehmoment beeinträchtigt sein können.

Es kann des Weiteren auch möglich sein, dass mehr als zwei elektrische Antriebe vorhanden sind und für diese weiteren Antriebe dann auch weitere Betriebstemperaturen ermittelt und berücksichtigt werden können und eine Momentenverteilung unter diesen Antrieben erfolgen kann. Es ist auch möglich, beliebig viele Betriebstemperaturen von Antrieben zu vergleichen. Dabei sollte diese jeweilige Betriebstemperatur zur entsprechenden Komponente (Antrieb) passen. Zum Beispiel Rotortemperatur vorne/hinten, Öltemperatur vorne/hinten, Statortemperatur vorne/hinten, Halbleitertemperatur vorne/hinten. Es kann beispielsweise ein Fahrzeug mit drei elektrischen Maschinen vorhanden sein und betrachtet werden, davon eine in der Vorderachse und zwei in der Hinterachse. Es können also mehr als zwei Antriebe und elektrische Maschinen vorhanden sein, etwa zwei elektrische Maschinen je Achse am Fahrzeug.

Gemäß einer bevorzugten Ausführungsform der elektrischen Antriebsvorrichtung umfasst diese eine erste Temperatursensoreinrichtung für den ersten elektrischen Antrieb, mit welcher die erste Betriebstemperatur erfassbar und an die Steuereinrichtung übermittelbar ist, und eine zweite Temperatursensoreinrichtung für den zweiten elektrischen Antrieb, mit welcher die zweite Betriebstemperatur erfassbar und an die Steuereinrichtung übermittelbar ist.

Gemäß einer bevorzugten Ausführungsform der elektrischen Antriebsvorrichtung umfasst diese eine Regeleinrichtung, mit welcher eine Drehmomentverteilung zwischen dem ersten elektrischen Antrieb und dem zweiten elektrischen Antrieb regelbar ist.

Die Regeleinrichtung kann eine Drehmomenterzeugung am jeweiligen Antrieb in Abhängigkeit von der aktuellen Temperatur an diesem Antrieb regeln, indem die elektrische Maschine an diesem Antrieb entsprechend gesteuert werden kann.

Gemäß einer bevorzugten Ausführungsform der elektrischen Antriebsvorrichtung ist die Steuereinrichtung dazu eingerichtet, einen ersten Differenzwert zwischen einer maximalen Grenztemperatur und einer aktuellen Temperatur für den ersten elektrischen Antrieb und/oder einen zweiten Differenzwert zwischen einer maximalen Grenztemperatur und einer aktueller Temperatur für den zweiten elektrischen Antrieb zu bilden, und daraus auf eine Reserve für ein noch zu erzeugendes Drehmoment am jeweiligen Antrieb zu schließen. In diesem Sinne können auch weitere Temperaturen und deren Differenzen für weitere Komponenten gebildet werden.

Betreffend die maximale Grenztemperatur, kann es sich dabei um eine vorbestimmte Größe handeln, vorteilhaft diejenige bei der der Antrieb anfängt das maximal zulässige Drehmoment zu reduzieren. Das maximale zulässige Drehmoment für diesen Antrieb kann dann proportional zur darüber hinaus weiter ansteigenden Temperatur reduziert werden. Die Grenztemperatur entspricht nicht unbedingt der maximal zulässigen Temperatur des jeweiligen Bauteils. Vielmehr kann diese den Temperaturwert beschreiben, ab dem eine Bauteilschutzfunktion aktiviert werden kann (beispielsweise eine Momentenverteilung) und das maximale Moment (Peakmoment) limitiert werden kann.

Die maximale Grenztemperatur kann dem vorbestimmten Wert für die Betriebstemperatur am jeweiligen Antrieb entsprechen. Die Reserve kann ein noch zu nutzendes Potential des Antriebs darstellen, etwa wieviel Drehmoment bei noch annehmbarer Resterhöhung der Betriebstemperatur noch am Antrieb gegeben sein kann, bevor dort die maximale (vorbestimmte) Grenztemperatur erreicht wird.

Gemäß einer bevorzugten Ausführungsform der elektrischen Antriebsvorrichtung ist die Steuereinrichtung dazu eingerichtet, durch eine erzeugbare Drehmomentverteilung die erste Betriebstemperatur und/oder die zweite Betriebstemperatur zu beeinflussen, um diese unterhalb eines jeweiligen Grenzwerts zu halten.

Die Drehmomentverteilung kann durch ein entsprechendes Ansteuern der elektrischen Maschine und/oder des entsprechenden Getriebes am jeweiligen Antrieb gesteuert werden.

Erfindungsgemäß erfolgt bei dem Verfahren zum Betreiben einer elektrischen Antriebsvorrichtung für ein Fahrzeug ein Bereitstellen einer erfindungsgemäßen elektrischen Antriebsvorrichtung; ein Ermitteln einer ersten Betriebstemperatur des ersten elektrischen Antriebs und einer zweiten Betriebstemperatur des zweiten elektrischen Antriebs; ein Steuern einer Erzeugung eines ersten Drehmoments an dem ersten elektrischen Antrieb und /oder eines zweiten Drehmoments an dem zweiten elektrischen Antrieb in Abhängigkeit von einer Fahrsituation des Fahrzeugs und/oder in Abhängigkeit von der ersten Betriebstemperatur und/oder von der zweiten Betriebstemperatur durch die Steuereinrichtung, wobei jenes des ersten Drehmoments oder des zweiten Drehmoments verringert wird, dessen zugehörige Betriebstemperatur einen vorbestimmten Wert übersteigt und das entsprechend andere des ersten Drehmoments oder des zweiten Drehmoments vergrößert wird, wenn dessen zugehörige Betriebstemperatur geringer als der vorbestimmte Wert ist.

Das Vergrößern des Drehmoments am kälteren Antrieb kann vorteilhaft solange erfolgen, bis die dortige Grenztemperatur des Antriebs erreicht ist, bis dahin kann das Gesamtdrehmoment des Fahrzeugs aufrechterhalten bleiben. Erst wenn die Betriebstemperatur an beiden Antrieben am oder über dem Grenzwert ist, kann das Gesamtdrehmoment verringert werden. Der Grenzwert kann dabei geringer sein als ein kritischer Temperaturwert, ab welchem der Antrieb nur noch sehr wenig oder kein Drehmoment liefern könnte. So kann die Anpassung der Temperatur am jeweiligen Antrieb vorteilhaft präventiv erfolgen, bevor sich die Betriebstemperatur an diesem Antrieb der kritischen Temperatur nähern würde.

Gemäß einer bevorzugten Ausführungsform des Verfahrens zum Betreiben einer elektrischen Antriebsvorrichtung werden für den ersten elektrischen Antrieb und/oder für den zweiten elektrischen Antrieb eine aktuelle Temperatur und eine maximale Grenztemperatur und/oder ein maximal erzielbares Drehmoment und ein minimal erzielbares Drehmoment ermittelt.

Gemäß einer bevorzugten Ausführungsform des Verfahrens zum Betreiben einer elektrischen Antriebsvorrichtung wird ein erster Differenzwert zwischen maximaler Grenztemperatur und aktueller Temperatur für den ersten elektrischen Antrieb und/oder ein zweiter Differenzwert zwischen maximaler Grenztemperatur und aktueller Temperatur für den zweiten elektrischen Antrieb gebildet, und daraus eine Reserve für ein noch zu erzeugendes Drehmoment am jeweiligen Antrieb ermittelt.

Gemäß einer bevorzugten Ausführungsform des Verfahrens zum Betreiben einer elektrischen Antriebsvorrichtung wird eine Regelabweichung ermittelt, welche für den jeweiligen Antrieb aus einer Differenz zwischen einer vorgegebenen Temperaturdifferenz beider Antriebe relativ zueinander und dem jeweiligen Differenzwert des Antriebs ermittelt wird, wobei die vorgegebenen Temperaturdifferenz eine Gewichtung einer Ausnutzung der Reserve darstellt, wobei die Regelabweichung in eine Drehmomentverteilung zwischen den Antrieben umgerechnet wird und/oder mit einer Regeleinrichtung eingestellt wird.

Die vorgegebene Temperaturdifferenz kann einem gewünschten Belastungsunterschied der Antriebe entsprechen, kann aber auch Null sein.

Die Regelabweichung kann eine Hilfsgröße zum Bestimmen der noch möglichen Reserve der Temperatur und des erzeugbaren Drehmoments am jeweiligen Antrieb oder an beiden Antrieben darstellen.

Gemäß einer bevorzugten Ausführungsform des Verfahrens zum Betreiben einer elektrischen Antriebsvorrichtung gibt die Regeleinrichtung eine Kennlinie zur Verteilung der Drehmomente an den Antrieben vor.

Mit der Kennlinie kann ein Betrieb der Regeleinrichtung besser vorgegeben werden.

Gemäß einer bevorzugten Ausführungsform des Verfahrens zum Betreiben einer elektrischen Antriebsvorrichtung wird durch eine erzeugte Drehmomentverteilung die erste Betriebstemperatur und/oder die zweite Betriebstemperatur beeinflusst, um diese unterhalb eines jeweiligen Grenzwerts zu halten.

Das Verfahren zeichnet sich weiterhin auch durch die bereits in Verbindung mit der elektrischen Antriebsvorrichtung genannten Merkmale und Vorteile aus und umgekehrt.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand der in den schematischen Figuren der Zeichnung angegebenen Ausführungsbeispiele näher erläutert.

### Es zeigen:

- Fig. 1: eine schematische Darstellung eines Fahrzeugs mit einer elektrischen Antriebsvorrichtung gemäß eines Ausführungsbeispiels der vorliegenden Erfindung;
- Fig. 2: eine Blockdarstellung zur Ermittlung von Parametern in einem Verfahren zum Betreiben einer elektrischen Antriebsvorrichtung für ein Fahrzeug gemäß eines Ausführungsbeispiels der vorliegenden Erfindung;
- Fig. 3: eine Kennlinie einer Regeleinrichtung für eine elektrische Antriebsvorrichtung gemäß eines Ausführungsbeispiels der vorliegenden Erfindung; und
- Fig. 4: eine Blockdarstellung von Verfahrensschritten des Verfahrens zum Betreiben einer elektrischen Antriebsvorrichtung für ein Fahrzeug gemäß einem Ausführungsbeispiel der vorliegenden Erfindung.

In den Figuren bezeichnen gleiche Bezugszeichen gleiche bzw. funktionsgleiche Elemente.

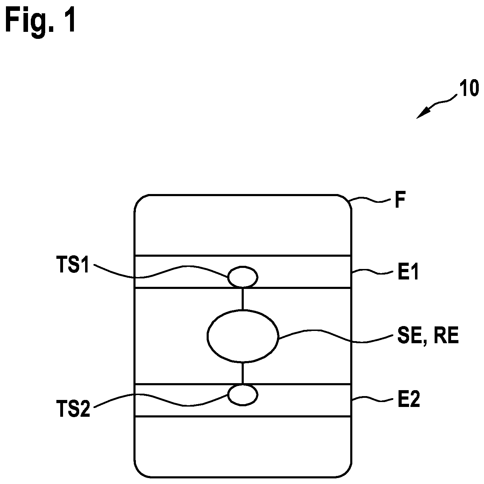

Fig. 1 zeigt eine schematische Darstellung eines Fahrzeugs mit einer elektrischen Antriebsvorrichtung gemäß eines Ausführungsbeispiels der vorliegenden Erfindung.

Die elektrische Antriebsvorrichtung 10 für ein Fahrzeug F umfasst einen ersten elektrischen Antrieb E1, welcher an einer Vorderachse des Fahrzeugs montierbar ist; einen zweiten elektrischen Antrieb E2, welcher an einer Hinterachse des Fahrzeugs F montierbar ist; eine Steuereinrichtung SE, welche mit dem ersten elektrischen Antrieb E1 und mit dem zweiten elektrischen Antrieb E2 verbunden ist und dazu eingerichtet ist, eine erste Betriebstemperatur des ersten elektrischen Antriebs E1 und eine zweite Betriebstemperatur des zweiten elektrischen Antriebs E2 zu ermitteln und eine Erzeugung eines ersten Drehmoments an dem ersten elektrischen Antrieb E1 und /oder eines zweiten Drehmoments an dem zweiten elektrischen Antrieb E2 in Abhängigkeit von einer Fahrsituation des Fahrzeugs und/oder in Abhängigkeit von der ersten Betriebstemperatur und/oder von der zweiten Betriebstemperatur zu steuern, wobei jenes des ersten Drehmoments oder des zweiten Drehmoments verringerbar ist, dessen zugehörige Betriebstemperatur einen vorbestimmten Wert übersteigt und das entsprechend andere des ersten Drehmoments oder des zweiten Drehmoments vergrößerbar ist wenn dessen zugehörige Betriebstemperatur geringer als der vorbestimmte Wert ist.

Die elektrische Antriebsvorrichtung 10 kann eine erste Temperatursensoreinrichtung TS1 für den ersten elektrischen Antrieb E1 umfassen, mit welcher die erste Betriebstemperatur erfassbar und an die Steuereinrichtung SE übermittelbar ist, und eine zweite Temperatursensoreinrichtung TS2 für den zweiten elektrischen Antrieb E2 umfasst, mit welcher die zweite Betriebstemperatur erfassbar und an die Steuereinrichtung SE übermittelbar ist.

Der erste Antrieb E1 kann als eine elektrische Achse ausgeformt sein und die erste Temperatursensoreinrichtung TS1 umfassen. Der zweite Antrieb E2 kann als eine elektrische Achse ausgeformt sein und die zweite Temperatursensoreinrichtung TS2 umfassen.

Die elektrische Antriebsvorrichtung 10 kann eine Regeleinrichtung RE umfassen, mit welcher eine Drehmomentverteilung zwischen dem ersten elektrischen Antrieb E1 und dem zweiten elektrischen Antrieb E2 regelbar ist.

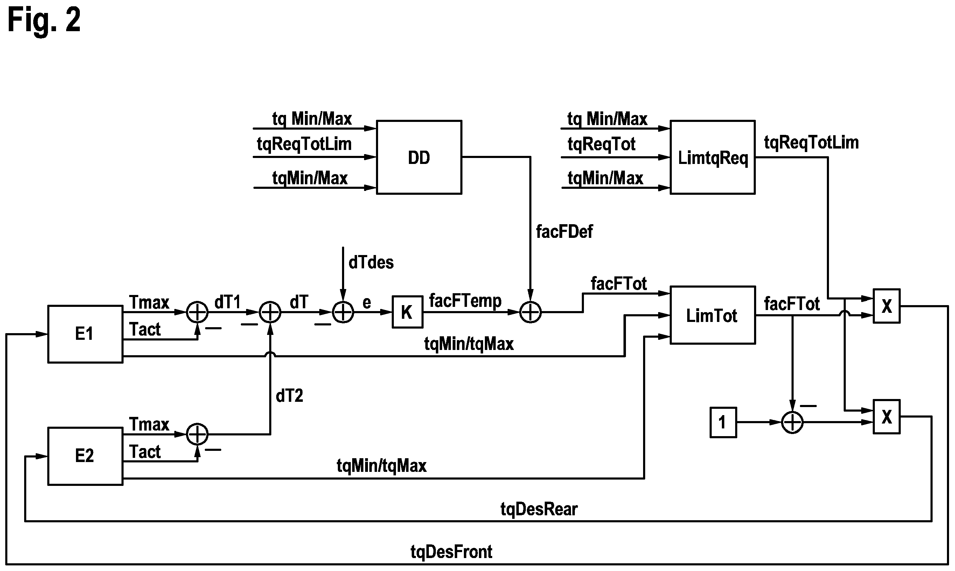

Fig. 2 zeigt eine Blockdarstellung zur Ermittlung von Parametern in einem Verfahren zum Betreiben einer elektrischen Antriebsvorrichtung für ein Fahrzeug gemäß einem Ausführungsbeispiel der vorliegenden Erfindung.

Die Fig. 2 zeigt eine Gesamtstrategie zur Verteilung des Drehmoments unter den Antrieben. Es kann dabei eine grundlegende Strategie zur Drehmomentverteilung (Signal facFDef) gewählt werden und vorgegeben werden. Diese Grundverteilung bildet sich zum Beispiel aus der Optimierung von Traktion oder Verbrauch. Dabei können die zugehörigen Regelgrößen in einem Regler DD zusammenlaufen oder dort vorbestimmt sein. Hierbei kann aber auch die Regelung DD weggelassen werden.

Auf diese Grundverteilung facFDef kann nun ein Korrekturwert aufaddiert werden, welcher für das Balancieren (Regeln) der Temperaturen der Antriebe verantwortlich sein kann (facFTemp). Wenn kein aktiver Ausgleich notwendig ist, ist der Wert dieses Signals null. Das resultierende Signal facFTot ist dann die Vorgabe für die Drehmomentverteilung die im Weiteren als Referenz dient und von dem System innerhalb der aktuellen Drehmomentgrenzen umgesetzt werden kann. Das bedeutet, dass im Block LimTot der Verteilungsfaktor ggf. nochmal angepasst werden kann, falls das gewünschte Summenmoment (tqReqTotLim) mit dem Verteilungsfaktor facFTot nicht umgesetzt werden kann. Das ist wichtig falls der Fahrer selbst bei aktiver Umverteilung aufgrund einer heißen Achse dennoch das maximale Moment abrufen will.

Mit dem Ausgangssignal von LimTot und dem Summenmoment werden dann das Sollmoment für den vorderen (tqDesFront) und hinteren Antrieb (tqDesRear) berechnet. Der Block LimTqReq beschreibt die Limitierung des Summenmoments auf Basis der zurückgemeldeten maximalen Drehmomente des vorderen und hinteren Antriebs.

Dabei ist zu verstehen, dass alle Signale mit "fac"-Term immer einen Verteilungswert zwischen 0 und 1 beschreiben. Der Wert 0 bedeutet das Wunschmoment wird komplett über die Hinterachse umgesetzt und der Wert 1 bedeutet das Wunschmoment wird komplett über die Vorderachse umgesetzt. Der Kern der Erfindung liegt auf der Berechnung von facFTemp und dessen additive Einbindung in die Betriebsstrategie oder in eine bekannte Betriebsstrategie, welche mitgenutzt werden kann.

Bei der Antriebsvorrichtung kann es sich um eine Antriebsvorrichtung handeln, wie diese beispielsweise in der Fig. 1 gezeigt wird. Dabei können an dem ersten Antrieb E1 und am zweiten Antrieb E2 jeweils Temperatursensoreinrichtungen vorhanden sein (nicht gezeigt). Der erste Antrieb E1 und der zweite Antrieb E2 können dabei Messsignale an die Steuereinrichtung liefern, durch welche die Temperaturverhältnisse und Drehmomentverhältnisse an den Antrieben ermittelbar sind. Dabei kann an dem ersten Antrieb E1 eine erste Betriebstemperatur T1 (allgemein als Tact bezeichnet) und an dem zweiten Antrieb eine zweite Betriebstemperatur T2 (allgemein als Tact bezeichnet) ermittelt werden, welche die im Betrieb aktuellen Temperaturen darstellen können. Ebenso kann das erste Drehmoment und das zweite Drehmoment ermittelt werden. Für jeden Antrieb kann dabei ein vorbestimmter Grenzwert Tmax bekannt sein und der Steuereinrichtung mitübermittelt werden, wobei der vorbestimmte Wert einen ersten Grenzwert Tmax für die erste Betriebstemperatur und einen zweiten Grenzwert Tmax für eine zweite Betriebstemperatur umfassen kann. Zu den Grenzwerten in Temperatur können auch Grenzwerte für die Drehmomente der Antriebe vorbestimmt oder bekannt sein, und diese aktuellen Drehmomenten-Limits tqMin und tqMax können dann an die Steuereinrichtung übermittelt werden, symbolisch in der Fig. 2 als Auswertungsroutine LimTot gezeigt. In der Fig. 2 sind diese Drehmomenten-Limits für die beiden Antriebe mit den gleichen Bezugszeichen versehen, diese können sich aber voneinander unterscheiden, wenn die Betriebstemperatur an den Antrieben unterschiedlich ist und/oder die Antriebe unterschiedlich dimensioniert sind. Die Temperaturinformation kann entweder als maximale (Grenzwert) und/oder aktuelle Betriebstemperatur gesendet werden oder als Differenz daraus (dT1, dT2).

Die Steuereinrichtung kann dabei dazu eingerichtet sein, einen ersten Differenzwert dT1 zwischen einer maximalen Grenztemperatur Tmax und einer aktuellen Temperatur Tact für den ersten elektrischen Antrieb E1 und/oder einen zweiten Differenzwert dT2 zwischen einer maximalen Grenztemperatur Tmax und einer aktuellen Temperatur für den zweiten elektrischen Antrieb E2 zu bilden, und daraus auf eine Reserve für ein noch zu erzeugendes Drehmoment am jeweiligen Antrieb zu schließen.

Wenn die Antriebe mehrere Temperaturen erfassen, kann diejenige genutzt werden, die für die Limitierung des Drehmoments die kritische Temperatur darstellt.

Durch Vergleich der thermischen Reserven dT1 und dT2 erhält man eine Information darüber welcher Antrieb aktuell die kleinere Temperaturreserve hat. Das Signal der aktuellen thermischen Vertrimmung kann dann weiter für eine Regelung genutzt werden um eine gewünschte Vertrimmung einzustellen. Wobei die Vertrimmung eine unterschiedliche Verteilung des Drehmoments an den Antrieben verkörpern kann.

In weiterer Folge kann eine Regelabweichung e ermittelt werden, welche für den jeweiligen Antrieb (E1, E2) aus einer Differenz zwischen einer vorgegebenen Temperaturdifferenz dTdes beider Antriebe relativ zueinander und dem jeweiligen Differenzwert des Antriebs (dT1, dT2) ermittelt werden kann, wobei die vorgegebenen Temperaturdifferenz dTdes eine Gewichtung einer Ausnutzung der Reserve darstellen kann, wobei die Regelabweichung e in eine Drehmomentverteilung zwischen den Antrieben (E1, E2) umgerechnet werden kann und/oder mit einer Regeleinrichtung eingestellt werden kann.

Die Regelabweichung e kann gebildet werden aus der Differenz einer solchen vorgegeben Soll-Vertrimmung (dTdes) und der aktuellen Vertrimmung (Differenz zwischen dT1 und dT2). Die Soll-Vertrimmung kann eine Gewichtung der Ausnutzung der thermischen Reserve zwischen ersten und zweiten Antrieb vorgeben, etwa zwischen vorderen und hinteren Antrieb. Bei einem negativen Wert von dTdes kann vorgesehen sein, dass die thermische Reserve des ersten, beispielsweise vorderen Antriebs, stärker gewichtet werden soll (z.B. größere Leistung/Dauer am vorderen Antrieb zum Rekuperieren). Ein positiver Wert von dTdes kann eine höhere Gewichtung des zweiten, beispielsweise hinteren Antriebs, verkörpern (z.B. größere Leistung/Dauer am hinteren Antrieb zum Beschleunigen).

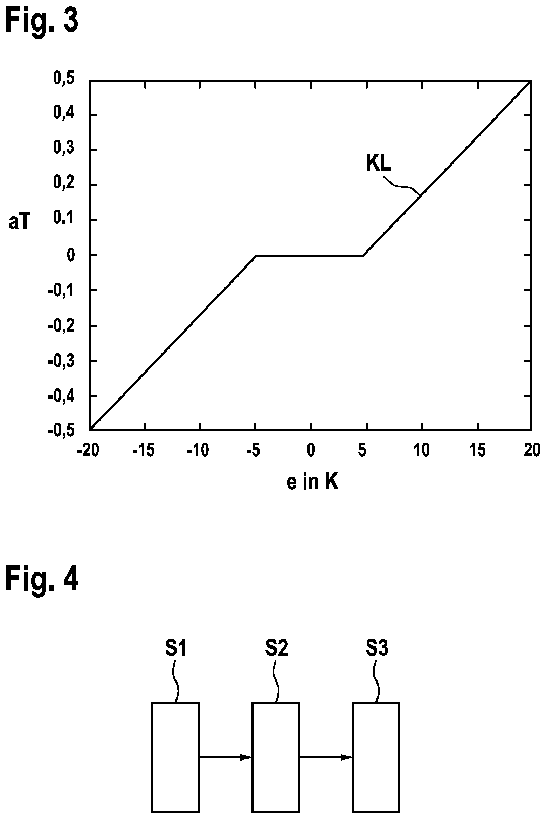

Die Regelabweichung kann mit Hilfe eines Reglers, beispielsweise eines P-Reglers mit Verstärkung K erzeugt werden in eine resultierende Vertrimmung (Differenz, Abweichung von der Gleichverteilung) der Drehmomentenverteilung facFTemp umgerechnet werden. Die Verstärkung (K) kann mit konstantem Wert oder das Eingangs- Ausgangsverhalten des Reglers als Kennlinie vorgegeben werden, etwa nach der Fig. 3. Durch eine Vorgabe der Kennlinie kann ein nichtlineares Verhalten ermöglicht sein, um zum Beispiel einen Bereich vorzugeben in dem bei geringen Regelabweichungen keine oder wenig Änderung der Drehmomentenverteilung erfolgen soll.

Das Ausgangssignal facFTemp stellt dann die Änderung der Drehmomentenverteilung dar um die Temperaturverhältnisse zu beeinflussen. Diese kann einer anderen als der Temperatur orientierten Verteilung, z.B. nach Energieeffizienz oder Fahrdynamik, überlagert werden und so ein finaler Verteilungswert facFtot gebildet werden. Der Verteilungswert kann so interpretiert werden, dass bei einem Wert von 0.5 beide Antriebe dasselbe Drehmoment stellen können. Ist dessen Wert gleich 1 wird das gesamte Drehmoment nur vom vorderen Antrieb gestellt und bei einem Wert von 0 nur durch den Hinteren. Im Weiteren kann die Limitierung des Verteilungswertes facFTot und des Gesamtdrehmoments tqReqTotLim (beider Antriebe zusammen) auf Basis der aktuellen Drehmomentenlimits erfolgen, sowie eine Umrechnung in die Soll-Drehmomente der Antriebe tqDesFront für den vorderen und tqDesRear für den hinteren. Hierbei können beispielsweise Standardvorgehensweisen genutzt werden.

Die Blöcke x beschreiben eine Multiplikation. Zusammen mit dem Block "1" dient dies zum Umrechnen des Summenmoments in Momente für die Antriebe. tqDesFront=facFtot*tqReqTotLim bzw. tqDesRear=(1-facFtot)*tqReqTotLim.

Dabei gilt, dass tqReqTot (total requested torque) das vom Fahrer angeforderte Moment bezeichnet, und tqReqTotLim (total limited requested torque) bezeichnet das auf die Grenzen der Achsen limitierte Fahrerwunschmoment.

Fig. 3 zeigt eine Kennlinie einer Regeleinrichtung für eine elektrische Antriebsvorrichtung gemäß einem Ausführungsbeispiel der vorliegenden Erfindung.

Wie im erfindungsgemäßen Verfahren und im Zusammenhang mit der Fig. 2 beschrieben, kann eine Regelabweichung e (in Kelvin) ermittelt werden, wobei die Regelabweichung e in eine Drehmomentverteilung zwischen den Antrieben umgerechnet werden kann und/oder mit einer Regeleinrichtung eingestellt werden kann. Dabei kann die Regeleinrichtung eine Kennlinie KL zur Verteilung der Drehmomente an den Antrieben vorgeben.

Die Y-Achse beschreibt die Änderung der Drehmomentenverteilung. Die Drehmomentverteilung ist ein Wert zwischen 0 und 1 beschreibt das Verhältnis des Vorderachsdrehmoments zum Gesamtdrehmoment. Der Y-Wert von 0.1 in dem Diagramm bedeutet, dass die Vorderachse 10% mehr Drehmoment übernimmt (relativ zum Gesamtmoment). Entsprechend würde ein Wert von - 0.2 bedeuten, dass die Hinterachse 20% mehr Drehmoment übernimmt.

Die Regeleinrichtung kann beispielsweise ein P-Regler mit Verstärkung sein, und kann in eine Vertrimmung der Drehmomentenverteilung umgerechnet werden. Das Eingangs- Ausgangsverhalten des Reglers kann als Kennlinie KL vorgegeben werden. Die Vorgabe als Kennlinie ermöglicht ein nichtlineares Verhalten, um zum Beispiel einen Bereich vorzugeben in dem bei geringen Regelabweichungen keine Änderung der Drehmomentenverteilung erfolgen soll.

Fig. 4 zeigt eine Blockdarstellung von Verfahrensschritten des Verfahrens zum Betreiben einer elektrischen Antriebsvorrichtung für ein Fahrzeug gemäß einem Ausführungsbeispiel der vorliegenden Erfindung.

Beim Verfahren zum Betreiben einer elektrischen Antriebsvorrichtung für ein Fahrzeug erfolgt ein Bereitstellen S1 einer erfindungsgemäßen elektrischen Antriebsvorrichtung; ein Ermitteln S2 einer ersten Betriebstemperatur des ersten elektrischen Antriebs und einer zweiten Betriebstemperatur des zweiten elektrischen Antriebs; und ein Steuern S3 einer Erzeugung eines ersten Drehmoments an dem ersten elektrischen Antrieb und /oder eines zweiten Drehmoments an dem zweiten elektrischen Antrieb in Abhängigkeit von einer Fahrsituation des Fahrzeugs und/oder in Abhängigkeit von der ersten Betriebstemperatur und/oder von der zweiten Betriebstemperatur durch die Steuereinrichtung, wobei jenes des ersten Drehmoments oder des zweiten Drehmoments verringert wird, dessen zugehörige Betriebstemperatur einen vorbestimmten Wert übersteigt und das entsprechend andere des ersten Drehmoments oder des zweiten Drehmoments vergrößert wird, wenn dessen zugehörige Betriebstemperatur geringer als der vorbestimmte Wert ist. Obwohl die vorliegende Erfindung anhand des bevorzugten Ausführungsbeispiels vorstehend vollständig beschrieben wurde, ist sie darauf nicht beschränkt, sondern auf vielfältige Art und Weise modifizierbar, und der Schutzbereich wird durch die beigefügten Ansprüche bestimmt.

## Patentansprüche

1. Elektrische Antriebsvorrichtung (10) für ein Fahrzeug (F) umfassend:
- einen ersten elektrischen Antrieb (E1), welcher an einer Vorderachse des Fahrzeugs montierbar ist;
- einen zweiten elektrischen Antrieb (E2), welcher an einer Hinterachse des Fahrzeugs (F) montierbar ist;
- eine Steuereinrichtung (SE), welche mit dem ersten elektrischen Antrieb (E1) und mit dem zweiten elektrischen Antrieb (E2) verbunden ist und dazu eingerichtet ist,
eine erste Betriebstemperatur (T1) des ersten elektrischen Antriebs (E1) und eine zweite Betriebstemperatur (T2) des zweiten elektrischen Antriebs (E2) zu ermitteln und eine Erzeugung eines ersten Drehmoments (M1) an dem ersten elektrischen Antrieb (E1) und /oder eines zweiten Drehmoments (M2) an dem zweiten elektrischen Antrieb (E2) in Abhängigkeit von einer Fahrsituation des Fahrzeugs und/oder in Abhängigkeit von der ersten Betriebstemperatur (T1) und/oder von der zweiten Betriebstemperatur (T2) zu steuern, wobei jenes des ersten Drehmoments (M1) oder des zweiten Drehmoments (M2) verringerbar ist, dessen zugehörige Betriebstemperatur einen vorbestimmten Wert übersteigt und das entsprechend andere des ersten Drehmoments (M1) oder des zweiten Drehmoments (M2) vergrößerbar ist wenn dessen zugehörige Betriebstemperatur geringer als der vorbestimmte Wert ist, wobei
die Steuereinrichtung (SE) dazu eingerichtet ist, einen ersten Differenzwert (dT1) zwischen einer maximalen Grenztemperatur und einer aktuellen Temperatur für den ersten elektrischen Antrieb (E1) und/oder einen zweiten Differenzwert (dT2) zwischen einer maximalen Grenztemperatur und einer aktueller Temperatur für den zweiten elektrischen Antrieb (E2) zu bilden, und daraus auf eine Reserve für ein noch zu erzeugendes Drehmoment am jeweiligen Antrieb (E1, E2) zu schließen, und die Steuereinrichtung (SE) dazu eingerichtet ist, durch eine erzeugbare Drehmomentverteilung die erste Betriebstemperatur (T1) und/oder die zweite Betriebstemperatur (T2) zu beeinflussen, um diese unterhalb eines jeweiligen Grenzwerts zu halten.

2. Elektrische Antriebsvorrichtung (10) nach Anspruch 1, bei welcher der vorbestimmte Wert einen ersten Grenzwert für die erste Betriebstemperatur (T1) und einen zweiten Grenzwert für eine zweite Betriebstemperatur (T2) umfasst.

3. Elektrische Antriebsvorrichtung (10) nach Anspruch 1 oder 2, welche eine erste Temperatursensoreinrichtung (TS1) für den ersten elektrischen Antrieb (E1) umfasst, mit welcher die erste Betriebstemperatur (T1) erfassbar und an die Steuereinrichtung (SE) übermittelbar ist, und eine zweite Temperatursensoreinrichtung (TS2) für den zweiten elektrischen Antrieb (E2) umfasst, mit welcher die zweite Betriebstemperatur (T2) erfassbar und an die Steuereinrichtung (SE) übermittelbar ist.

4. Elektrische Antriebsvorrichtung (10) nach einem der Ansprüche 1 bis 3, welche eine Regeleinrichtung (RE) umfasst, mit welcher eine Drehmomentverteilung zwischen dem ersten elektrischen Antrieb (E1) und dem zweiten elektrischen Antrieb (E2) regelbar ist.

5. Verfahren zum Betreiben einer elektrischen Antriebsvorrichtung (10) für ein Fahrzeug (F), umfassend die Schritte:
- Bereitstellen (S1) einer elektrischen Antriebsvorrichtung (10) nach einem der Ansprüche 1 bis 4;
- Ermitteln (S2) einer ersten Betriebstemperatur (T1) des ersten elektrischen Antriebs (E1) und einer zweiten Betriebstemperatur (T2) des zweiten elektrischen Antriebs (E2);
- Steuern (S3) einer Erzeugung eines ersten Drehmoments (M1) an dem ersten elektrischen Antrieb (E1) und /oder eines zweiten Drehmoments (M2) an dem zweiten elektrischen Antrieb (E2) in Abhängigkeit von einer Fahrsituation des Fahrzeugs und/oder in Abhängigkeit von der ersten Betriebstemperatur (T1) und/oder von der zweiten Betriebstemperatur (T2) durch die Steuereinrichtung (SE), wobei jenes des ersten Drehmoments (M1) oder des zweiten Drehmoments (M2) verringert wird, dessen zugehörige Betriebstemperatur einen vorbestimmten Wert übersteigt und das entsprechend andere des ersten Drehmoments (M1) oder des zweiten Drehmoments (M2) vergrößert wird, wenn dessen zugehörige Betriebstemperatur geringer als der vorbestimmte Wert ist, wobei für den ersten elektrischen Antrieb (E1) und/oder für den zweiten elektrischen Antrieb (E2) eine aktuelle Temperatur und eine maximale Grenztemperatur und/oder ein maximal erzielbares Drehmoment und ein minimal erzielbares Drehmoment ermittelt werden, und ein erster Differenzwert (dT1) zwischen maximaler Grenztemperatur und aktueller Temperatur für den ersten elektrischen Antrieb (E1) und/oder ein zweiter Differenzwert (dT2) zwischen maximaler Grenztemperatur und aktueller Temperatur für den zweiten elektrischen Antrieb (E2) gebildet wird, und daraus eine Reserve für ein noch zu erzeugendes Drehmoment am jeweiligen Antrieb (E1, E2) ermittelt wird und durch eine erzeugte Drehmomentverteilung die erste Betriebstemperatur (T1) und/oder die zweite Betriebstemperatur (T2) beeinflusst wird, um diese unterhalb eines jeweiligen Grenzwerts zu halten.

6. Verfahren nach Anspruch 5, bei welchem eine Regelabweichung (e) ermittelt wird, welche für den jeweiligen Antrieb (E1, E2) aus einer Differenz zwischen einer vorgegebenen Temperaturdifferenz (dTdes) beider Antriebe relativ zueinander und dem jeweiligen Differenzwert des Antriebs (dT1, dT2) ermittelt wird, wobei die vorgegebenen Temperaturdifferenz (dTdes) eine Gewichtung einer Ausnutzung der Reserve darstellt, wobei die Regelabweichung (e) in eine Drehmomentverteilung zwischen den Antrieben (E1, E2) umgerechnet wird und/oder mit einer Regeleinrichtung (RE) eingestellt wird.

7. Verfahren nach Anspruch 6, bei welchem die Regeleinrichtung (RE) eine Kennlinie (KL) zur Verteilung der Drehmomente an den Antrieben (E1, E2) vorgibt.

## Claims

1. Electric drive device (10) for a vehicle (F), comprising:
- a first electric drive (E1) which can be mounted on a front axle of the vehicle;
- a second electric drive (E2) which can be mounted on a rear axle of the vehicle (F);
- a control device (SE) which is connected to the first electric drive (E1) and the second electric drive (E2) and is configured
to determine a first operating temperature (T1) of the first electric drive (E1) and a second operating temperature (T2) of the second electric drive (E2) and to control generation of a first torque (M1) at the first electric drive (E1) and/or a second torque (M2) at the second electric drive (E2) depending on a driving situation of the vehicle and/or depending on the first operating temperature (T1) and/or the second operating temperature (T2), wherein that torque from amongst the first torque (M1) or the second torque (M2) of which the associated operating temperature exceeds a predetermined value can be reduced and the correspondingly other torque from amongst the first torque (M1) or the second torque (M2) can be increased if its associated operating temperature is lower than the predetermined value, wherein
the control device (SE) is configured to form a first differential value (dT1) between a maximum limit temperature and a current temperature for the first electric drive (E1) and/or a second differential value (dT2) between a maximum limit temperature and a current temperature for the second electric drive (E2) and to draw conclusions therefrom about a reserve for a torque still to be generated at the respective drive (E1, E2), and the control device (SE) is configured to influence the first operating temperature (T1) and/or the second operating temperature (T2) by means of a generatable torque distribution in order to keep them below a respective limit value.

2. Electric drive device (10) according to Claim 1, in which the predetermined value comprises a first limit value for the first operating temperature (T1) and a second limit value for a second operating temperature (T2).

3. Electric drive device (10) according to Claim 1 or 2, which comprises a first temperature sensor device (TS1) for the first electric drive (E1), with which first temperature sensor device the first operating temperature (T1) can be detected and transmitted to the control device (SE), and a second temperature sensor device (TS2) for the second electric drive (E2), with which second temperature sensor device the second operating temperature (T2) can be detected and transmitted to the control device (SE).

4. Electric drive device (10) according to any of Claims 1 to 3, which comprises a regulation device (RE) with which a torque distribution between the first electric drive (E1) and the second electric drive (E2) can be regulated.

5. Method for operating an electric drive device (10) for a vehicle (F), comprising the steps of:
- providing (S1) an electric drive device (10) according to any of Claims 1 to 4;
- determining (S2) a first operating temperature (T1) of the first electric drive (E1) and a second operating temperature (T2) of the second electric drive (E2);
- controlling (S3) generation of a first torque (M1) at the first electric drive (E1) and/or a second torque (M2) at the second electric drive (E2) depending on a driving situation of the vehicle and/or depending on the first operating temperature (T1) and/or the second operating temperature (T2) by the control device (SE), wherein that torque from amongst the first torque (M1) or the second torque (M2) of which the associated operating temperature exceeds a predetermined value is reduced and the correspondingly other torque from amongst the first torque (M1) or the second torque (M2) is increased if its associated operating temperature is lower than the predetermined value, wherein a current temperature and a maximum limit temperature and/or a maximum attainable torque and a minimum attainable torque are determined for the first electric drive (E1) and/or for the second electric drive (E2), and a first differential value (dT1) between the maximum limit temperature and the current temperature for the first electric drive (E1) and/or a second differential value (dT2) between the maximum limit temperature and the current temperature for the second electric drive (E2) are/is formed, and a reserve for a torque still to be generated at the respective drive (E1, E2) is determined therefrom and the first operating temperature (T1) and/or the second operating temperature (T2) are/is influenced by a generated torque distribution in order to keep them below a respective limit value.

6. Method according to Claim 5, in which a control deviation (e) is determined, which is determined for the respective drive (E1, E2) from a difference between a specified temperature difference (dTdes) between the two drives relative to each other and the respective differential value of the drive (dT1, dT2), wherein the specified temperature difference (dTdes) represents a weighting of a utilization of the reserve, wherein the control deviation (e) is converted into a torque distribution between the drives (E1, E2) and/or is set with a regulation device (RE).

7. Method according to Claim 6, in which the regulation device (RE) specifies a characteristic curve (KL) for distributing the torques to the drives (E1, E2).

## Revendications

1. Dispositif d'entraînement électrique (10) pour un véhicule (F) comprenant :
- un premier entraînement électrique (E1), qui peut être monté sur un essieu avant du véhicule ;
- un deuxième entraînement électrique (E2), qui peut être monté sur un essieu arrière du véhicule (F) ;
- un système de commande (SE), qui est relié au premier entraînement électrique (E1) et au deuxième entraînement électrique (E2) et qui est mis au point pour
déterminer une première température de fonctionnement (T1) du premier entraînement électrique (E1) et une deuxième température de fonctionnement (T2) du deuxième entraînement électrique (E2) et pour commander une génération d'un premier couple de rotation (M1) sur le premier entraînement électrique (E1) et/ou d'un deuxième couple de rotation (M2) sur le deuxième entraînement électrique (E2) en fonction d'une situation de conduite du véhicule et/ou en fonction de la première température de fonctionnement (T1) et/ou de la deuxième température de fonctionnement (T2), celui parmi le premier couple de rotation (M1) ou le deuxième couple de rotation (M2), dont la température de fonctionnement associée dépasse une valeur prédéfinie, pouvant être réduit et l'autre correspondant parmi le premier couple de rotation (M1) ou le deuxième couple de rotation (M2) pouvant être augmenté lorsque sa température de fonctionnement associée est inférieure à la valeur prédéfinie,
le système de commande (SE) étant mis au point pour former une première valeur de différence (dT1) entre une température limite maximale et une température actuelle pour le premier entraînement électrique (E1) et/ou une deuxième valeur de différence (dT2) entre une température limite maximale et une température actuelle pour le deuxième entraînement électrique (E2) pour déduire sur cette base une réserve pour un couple de rotation restant à générer sur l'entraînement (E1, E2) respectif, le système de commande (SE) étant mis au point pour influencer la première température de fonctionnement (T1) et/ou la deuxième température de fonctionnement (T2) par une répartition de couple de rotation pouvant être générée pour maintenir ladite température de fonctionnement en dessous d'une valeur limite respective.

2. Dispositif d'entraînement électrique (10) selon la revendication 1, dans lequel la valeur prédéfinie comprend une première valeur limite pour la première température de fonctionnement (T1) et une deuxième valeur limite pour une deuxième température de fonctionnement (T2).

3. Dispositif d'entraînement électrique (10) selon la revendication 1 ou 2, lequel comprend un premier système de détection de température (TS1) pour le premier entraînement électrique (E1), au moyen duquel la première température de fonctionnement (T1) peut être détectée et transmise au système de commande (SE), et un deuxième système de détection de température (TS2) pour le deuxième entraînement électrique (E2), au moyen duquel la deuxième température de fonctionnement (T2) peut être détectée et transmise au système de commande (SE).

4. Dispositif d'entraînement électrique (10) selon l'une des revendications 1 à 3, lequel comprend un système de régulation (RE), au moyen duquel une répartition de couple de rotation entre le premier entraînement électrique (E1) et le deuxième entraînement électrique (E2) peut être régulée.

5. Procédé pour faire fonctionner un dispositif d'entraînement électrique (10) pour un véhicule (F), comprenant les étapes :
- fourniture (S1) d'un dispositif d'entraînement électrique (10) selon l'une des revendications 1 à 4 ;
- détermination (S2) d'une première température de fonctionnement (T1) du premier entraînement électrique (E1) et d'une deuxième température de fonctionnement (T2) du deuxième entraînement électrique (E2) ;
- commande (S3) d'une génération d'un premier couple de rotation (M1) sur le premier entraînement électrique (E1) et/ou d'un deuxième couple de rotation (M2) sur le deuxième entraînement électrique (E2) en fonction de la situation de conduite du véhicule et/ou en fonction de la première température de fonctionnement (T1) et/ou de la deuxième température de fonctionnement (T2) par le système de commande (SE), celui du premier couple de rotation (M1) ou du deuxième couple de rotation(M2) dont la température de fonctionnement associée dépasse une valeur prédéfinie étant réduit et l'autre correspondant du premier couple de rotation (M1) ou du deuxième couple de rotation (M2) étant augmenté lorsque sa température de fonctionnement associée est inférieure à la valeur prédéfinie, une température actuelle et une température limite maximale et/ou un couple de rotation pouvant être atteint au maximum et un couple de rotation pouvant être atteint au minimum étant déterminés pour le premier entraînement électrique (E1) et/ou pour le deuxième entraînement électrique (E2), et une première valeur de différence (dT1) entre la température limite maximale et la température actuelle étant formée pour le premier entraînement électrique (E1) et/ou une deuxième valeur de différence (dT2) entre la température limite maximale et la température actuelle étant formée pour le deuxième entraînement électrique (E2), et une réserve pour un couple de rotation restant à générer sur de l'entraînement (E1, E2) respectif étant déterminée sur cette base et la première température de fonctionnement (T1) et/ou la deuxième température de fonctionnement (T2) étant influencées par une répartition de couple de rotation générée pour les maintenir en dessous d'une valeur limite respective.

6. Procédé selon la revendication 5, dans lequel un écart de régulation (e) est déterminé, lequel est déterminé pour l'entraînement (E1, E2) respectif à partir d'une différence entre une différence de température spécifiée (dTdes) des deux entraînements l'un par rapport à l'autre et la valeur de différence respective de l'entraînement (dT1, dT2), la différence de température spécifiée (dTdes) représentant une pondération de l'utilisation de la réserve, l'écart de régulation (E) étant converti en une répartition de couple de rotation entre les entraînements (E1, E2) et/ou étant réglé avec un système de régulation (RE).

7. Procédé selon la revendication 6, dans lequel le système de régulation (RE) spécifie une courbe caractéristique (KL) pour la répartition des couples de rotation sur les entraînements (E1, E2).
